# EUROPEAN PATENT SPECIFICATION

(11) **EP 2 393 347 B1**
(45) Date of publication and mention of the grant of the patent: **08.04.2015**
(21) Application number: 10738244.2
(22) Date of filing: 04.02.2010
(51) Int. Cl.: A01G 9/26, F21V 21/008, F21V 21/14, F21V 14/02

(54) **METHOD AND ARRANGEMENT FOR ILLUMINATING GREENHOUSE PLANTS**
VERFAHREN UND ANORDNUNG ZUR BELEUCHTUNG VON GEWÄCHSHAUSPFLANZEN
PROCÉDÉ ET AGENCEMENT D'ÉCLAIRAGE DE PLANTES DE SERRE

(30) Priority: 04.02.2009 FI 20090035
(43) Date of publication of application: 14.12.2011
(73) Proprietor: AssimiLight Oy Ltd, 05880 Hyvinkää (FI)
(72) Inventor: RAJALA, Juhani, FI-05880 Hyvinkää (FI); BURMOI, Tauno, FI-33400 Tampere (FI)
(74) Representative: Kolster Oy Ab
(86) International application number: PCT/FI2010/050066
(87) International publication number: WO 2010/089455

(56) References cited:
- EP-A2- 2 090 824
- WO-A1-2005/027621
- WO-A1-2005/027621
- WO-A1-2005/033580
- AT-B- 341 617
- DE-A1- 10 237 062
- DE-C- 867 473
- JP-A- 2002 367 424
- JP-A- 2004 166 638
- JP-A- 2005 027 521
- KR-A- 20050 060 585
- NL-C1- 1 029 324
- SU-A1- 1 018 592

## Description

### Background of the invention

The invention relates to a method for illuminating greenhouse plants.

The invention further relates to an arrangement for illuminating greenhouse plants.

Greenhouse plants are typically illuminated by fastening illuminators above the plants on support structures. The illumination of greenhouse plants consumes a considerable amount of energy. In addition, an illuminator generates waste heat that heats the greenhouse in excess. Thus, roof vents of the greenhouse typically need to be opened to lower the inside temperature. This then wastes energy and removes from the greenhouse carbon dioxide that has been added therein and that the plants need for photosynthesis. Because the illuminators are fastened above the plants, the bottom parts of the plants receive less light that the top parts. Thus, the bottom leaves of the plants typically receive too little light, and they cannot photosynthesize and only use up the photosynthesis products provided by the top part of the plant. In addition to the high energy consumption, greenhouse illuminators also illuminate the space outside the greenhouse, that is, greenhouses typically produce a large amount of light pollution. The fastening and hanging structures of the illuminators also overshadow the plants and prevent the very important natural light from reaching them.

In illuminating greenhouse plants, solutions have been tested, in which in addition to illuminators above, another set of illuminators is hung lower, close to the leaves of the plants, or in which some of the illuminators above on the ceiling structures have been replaced with ones hanging from above. However, heat generation of such illuminators must not be very high so that the illuminators do not burn and thus damage the leaves of the plants. Thus, in such a solution, quite a large number of lower-power illuminators are needed, because the luminosity of the illuminator then remains reasonably low. There have been attempts to prevent damage to the leaves of the plants by swinging the lights close to the plants back and forth, but this does not diminish the number of required lights. All in all, this type of solution becomes quite expensive in investment costs. In this solution, too, the illuminators and their hanging structures in particular overshadow the plants and prevent natural light from reaching them. In addition, illuminator structures arranged at maintenance aisles in particular often hamper the performance of maintenance and harvesting operations.

Publication US 6 178 692 discloses a solution in which vertical growing columns are illuminated with a sulphur plasma lamp that is arranged on a movable frame. Among other things, a magnetron required by the sulphur plasma lamp is arranged on the frame, and the frame is set beside the growing column. However, this type of solution does not solve problems related to the total illumination of the greenhouse plants.

Publication SU 1018592 discloses a solution, in which light sources hung from a frame and moved relative and opposite to each other are arranged in two adjacent plant gaps. A specific problem with this solution in respect of maintaining plants is that fixed structures in plant gaps hamper taking care of the plants. In addition, the solution is rigid and not suitable for large greenhouses, for instance, because each plant row gap has only one frame and light source, or for illuminating high growths that are often supported upright by vertical strings or other supports, because the turning of the illuminators into a position where they illuminate from above would not be possible in the manner shown by the publication.

Furthermore DE 867 473 C discloses a method and an arrangement for illuminating greenhouse plants, wherein above the plants at least one guide is arranged, from which at least one illuminator unit is hung which is movable in the direction of the guide to illuminate the plants close to the plants and that comprises at least one bracket, and into each bracket at least one illuminator is arranged in such a manner that each bracket with its illuminator is movable upward for instance when plants are maintained.

### Brief description of the invention

It is an object of this invention to provide a novel solution for illuminating greenhouse plants.

This is solved with a method according to claim 1 and an arrangement according to claim 8.

Various aspects of the invention comprise a method and an arrangement as defined in the independent claims. Further embodiments of the invention are disclosed in the dependent claims.

The idea of the invention is to illuminate the plants in the greenhouse in such a manner that at least some of the illuminators used in illuminating the plants are arranged on brackets arranged above the plants and hung from a single guide or from double guides. These brackets are movable upward for the purpose of maintaining the plants, for instance.

An advantage of the invention is that the illuminators may be arranged close to the plants, whereby the lighting power of the illuminator in the area of the growth is higher than that of illuminators arranged further away, which means that considerably fewer illuminators are needed than before. Thus, energy consumption of illumination may be considerably decreased. Further, the excessive increase in the inside temperature of the greenhouse caused by illumination may be markedly reduced. Thus, it is no longer so necessary to ventilate greenhouses to lower the temperature, whereby carbon dioxide will not escape from the greenhouse and heat is not lost because of this ventilation. This also reduces carbon dioxide emissions. Because fewer illuminators are needed than before, the purchase and installation costs of illuminators are also lower. Because the amount of electrical energy used by illumination is also smaller, the size of the electrical connection line and the main fuses need not be as large as before.

The number of fastening structures for the illuminators above is also reduced, which means that the fastening structures and illuminators no longer overshadow the plants as much as before and prevent natural light from reaching the plants. In addition, maintenance work of the illuminators, such as replacement of light bulbs, washing of reflectors and the like, is considerably easier and less expensive to do at the height of the growth than up at a height of 3 to 6 metres.

Arranging illuminators close to plants also often causes problems for maintenance and harvesting of plants, for example, because the structures are then in the way of the work. In this solution, this problem is solved in such a manner that the brackets with their illuminators may be lifted up so that the maintenance and harvesting work may be done unobstructed.

The idea of an embodiment is that the bracket is lifted up by turning the bracket relative to a turning joint which may be a separate joint that belongs to the suspension of the bracket or a suspension element acting as a joint. An advantage of this embodiment is that the structure is simple and the bracket may thus be lifted fully horizontal in the direction of the guides, if desired. The illuminator structures are then not at all in the way of maintenance and harvesting work.

The idea of an embodiment is that the structure of the bracket continues past the guide to the opposite side of the turning joint, and a counter weight is arranged on this opposite side to facilitate the turning, whereby an inductor of the illuminator, for example, may act as the counter weight. The advantage of this embodiment is that this type of structure stabilizes and facilitates the turning up of the bracket.

The idea of an embodiment is that at least two illuminator units are arranged to each guide or guide pair. The advantage of this embodiment is that light may be distributed more evenly to the plants and the dimensioning of the movement rate may be done in a more flexible manner.

The idea of an embodiment is that the greenhouse has plant row gaps, and the illuminator units are arranged to move in the direction of the gaps. A slowly moving light reaches the growth extensively from different angles and directions, which further facilitates reaching evenly the entire leafage that is capable of photosynthesis. This way, the leafage in the middle and bottom parts is also made to produce photosynthesis products instead of using them. Because the illuminators move past the plants, they do not have time to heat and burn the surface of the leaves or damage the fruit, even if the thermal radiation they produce was quite strong. In addition, this improves the homogeneity of the illumination of the plants.

The idea of an embodiment is that the illuminator units are moved essentially back and forth along a plant row gap or around two adjacent plant row gaps. This embodiment provides the advantage that it is simpler to dimension optimal illumination and to control the illuminator units in terms of photosynthesis. This also facilitates the provision of homogeneous lighting conditions.

The idea of an embodiment is that the illuminators produce the light required by the plants for photosynthesis. This embodiment provides the advantage that the lights necessary for photosynthesis can thus be arranged close to the plants, but may, however, be moved out of the way during maintenance and harvesting work.

The idea of an embodiment is that plants are illuminated with the illuminators at least partly in lateral direction. This embodiment provides the advantage that illuminating plants with a sideways light by preferably using an illuminator arranged between the plant rows or growths, allows the plants to obtain light almost to the entire leaf area capable of photosynthesis, in other words, the homogeneity of the illumination increases. In addition, the leaves of the bottom part of the growth are also capable of photosynthesis. Illuminators illuminating plants sideways also heat the bottom part of the growth to some extent, which reduces air humidity and provides more even lighting and temperature conditions in the greenhouse. Even conditions prevent the occurrence of fungal diseases in the greenhouse. All in all, the illumination is even and thus the automatic watering conditions also remain even. The temperature differences in the growth are also reduced, which facilitates biological control.

The idea of an embodiment is to move the illuminator units essentially continuously along the guides in such a manner that the illuminator illuminates each plant for a time. This embodiment provides the advantage that by chopping the light and making it rhythmic, it is possible to simultaneously optimize both the number of required illuminators and the lighting conditions of the plant in respect of photosynthesis, that is, reduce the number of illuminators and at the same time achieve a high photosynthesis capacity for the plants. This also facilitates the provision of homogeneous lighting conditions for the entire growth.

The idea of an embodiment is that at least two illuminators are arranged in each bracket. This embodiment provides the advantage that it is easier to adjust the lighting conditions in relation to the plants being illuminated and their growth phase. This also facilitates the provision of homogeneous lighting conditions for the entire growth.

The idea of an embodiment is that the illuminators in a bracket are arranged vertically at different heights. This embodiment provides the advantage that it is easier to adjust the lighting for instance as the plants grow. This also facilitates the provision of homogeneous lighting conditions for the entire growth, especially when illuminating high plants that are supported upright.

The idea of an embodiment is that at least some of the brackets are arranged between growths. This embodiment provides the advantage that illuminators arranged between growths need not necessarily be moved up during maintenance and harvesting work. This also facilitates the provision of homogeneous lighting conditions for the entire growth.

The idea of an embodiment is that the light of at least some illuminators is directed by means of wedge-like mirror or reflecting surfaces in such a manner that one illuminator may symmetrically or asymmetrically illuminate the growth on opposite sides of the illuminator. This embodiment provides the advantage that one illuminator may illuminate for instance plant rows, individual plants or plant groups on both sides of the illuminator, for example two adjacent plant rows may be illuminated by an illuminator arranged in a plant row gap. The direction of illuminators is easy to do either manually or automatically. This way, the lighting conditions may easily be adjusted for different plant species or varieties and changed as the plants grow. Because a relatively small number of illuminators is needed, the amount of light pollution also becomes smaller than before.

The idea of an embodiment is that two wedge-like mirror or reflecting surfaces are arranged at the illuminator in such a manner that the mirror or reflecting surfaces are arranged on opposite sides of the illuminator so as to be able to direct substantially the entire luminosity to the growth. This embodiment provides the advantage that it essentially improves the utilization of the available luminosity and significantly reduces the spreading of light pollution to the environment.

The idea of an embodiment is that illuminator units are connected to each other with push bars, whereby moving one bracket also moves the other illuminator units connected to it. This embodiment provides the advantage that the entire illuminator unit group connected together with push bars may be moved by moving one, leading illuminator unit. This also makes movement control simpler and easier.

The idea of an embodiment is to take the current necessary for moving the illuminator units from a bus bar, in which case the distance between the illuminator units may be dimensioned freely as necessary. This embodiment provides the advantage that illumination may be dimensioned in a more flexible manner.

The idea of an embodiment is to illuminate each plant simultaneously from more than one direction at least some of the time. This embodiment provides the advantage that light from several angles and directions may be better distributed on all sides of the growth, which also improves the photosynthesis performance of the plants.

### Brief description of figures

The invention will be described in greater detail in the attached drawings, in which
Figure 1 is a schematic top view of a section of a greenhouse,
Figure 2 is a schematic side view of an embodiment of greenhouse illumination,
Figure 3 is a schematic side view of an illuminator unit,
Figure 4 is a schematic view of an embodiment of greenhouse illumination.

In the figures, some embodiments of the invention are shown simplified for the sake of clarity. Similar parts are marked with the same reference numbers in the figures.

### Detailed description of the invention

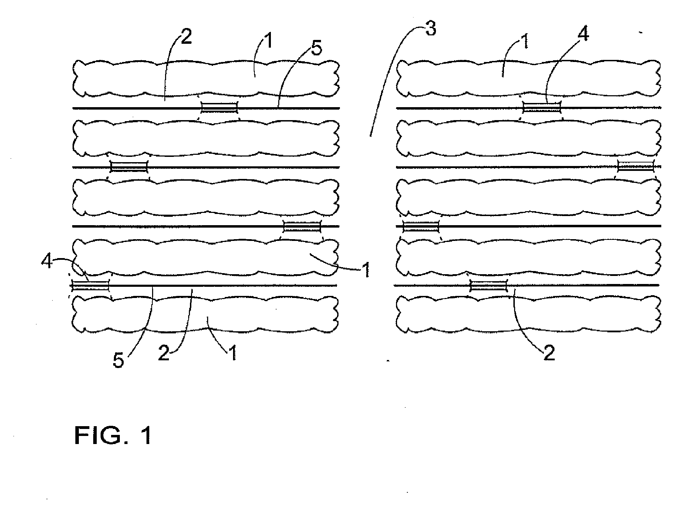

Figure 1 is a schematic top view of a section of a typical greenhouse. In Figure 1, reference number 1 depicts the plant rows 1. The plant row gaps 2 are any gaps between two plant rows 1, which are sufficiently wide to accommodate illuminators. The plant row gaps 2 may then be maintenance aisles or gaps between pairs of seedling rows, for instance.

In this patent application, a maintenance aisle refers to a greenhouse aisle that is used when performing maintenance work of plants, such as spraying, leave removal, and supporting plants. A maintenance aisle is also used during harvesting. If, when maintaining the growths, trolleys or other movable vehicles are used, the maintenance aisles are also utilized for moving these. Heating pipes are typically arranged on floor-level to these maintenance aisles. In professional cultivation, maintenance aisles do not typically have illuminators, because then a solution is also needed to move the illuminators away during maintenance work from the maintenance aisles that are generally 50 to 120 m long.

Plants that are supported upright, such as tomato, cucumber, and capsicum, are generally planted in what are known as pair seedling rows. Two plant rows are then located close to each other and a narrow gap remains between them that does not allow room for maintenance work, and between the thus formed pair seedling rows the maintenance aisles described above are arranged. Growths of this type consisting of plants supported upright, may typically be 2 to 5 m high, for instance. Ornamental plant growths may, in turn, be considerably lower depending on the plant.

In the embodiment of Figure 1, the plant rows 1 are arranged in two different parts in such a manner that there is a central aisle 3 between them. The plants in a plant row may be any plants grown in a greenhouse, such as tomato, cucumber, capsicum, potted vegetables, and ornamental plant species.

Above the plants, guides 5 are arranged either individually, in pairs, or in some other suitable manner. One or more illuminator units 4 may also be arranged in a guide or guide pair. Illuminator units 4 may be arranged for example in gaps between pairs of seedling rows, in maintenance aisles and/or other sufficiently wide plant row gaps, either in each plant row gap or as necessary. In some embodiments, the illuminator units may as possible also be arranged between growths, if there is enough space for an illuminator unit. In some embodiments, for instance when illuminating typically low plants, such as potted plants, grown on tables, beds, or other corresponding platforms the illuminator units may, in turn, be arranged above the growth in the immediate vicinity thereof, at a distance of 1 to 1.5 m from the growth, for instance. When arranging the illuminator units between the growths and/or above the growth, the greenhouse does not necessarily need to have actual plant rows, but plants may also be grown in plant groups, for example. Thus, Figure 1 is a schematic and simplified view of the lighting principle, and the plant row gap 2 shown in the figure may, thus, be any of the plant row gap types mentioned above, and a plant row 1 may refer to a plant group, individual plant row, one of the plant rows in a pair seedling row, or the entire pair seedling row.

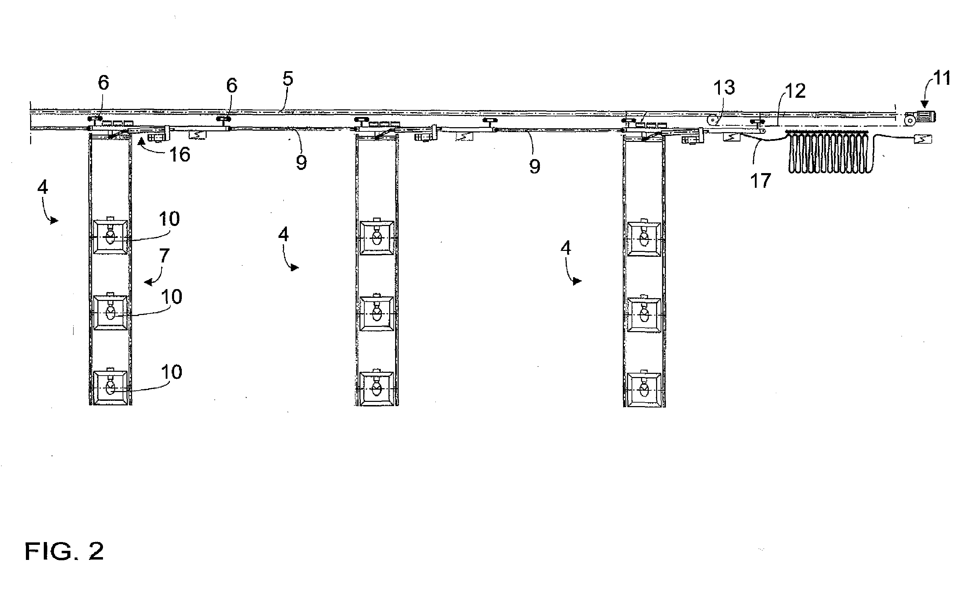

The illuminator unit 4 comprises at least suspension members and at least one bracket with at least one illuminator arranged thereto. Figure 2 shows an embodiment of an illuminator unit 4 in more detail. The illuminator units 4 are moved on guides while the brackets and illuminators are above the plants and/or between them.

In some embodiments, the plants are illuminated at least partly from the side. This may be done, for instance, by arranging the illuminators in the plant row gaps or between the growths or by directing the light with reflecting or mirror surfaces. The plants preferably mainly receive the light they need for photosynthesis from the side. The illuminator units 4 are moved along the plant rows gaps 2 essentially in the longitudinal direction of the gap in such a manner that light is directed to each plant for a time.

A plant begins photosynthesis when it receives enough light. After the light fades, the plant typically continues photosynthesis for a time. Thus, photosynthesis does not end when the bracket with the illuminators has moved away from the plant. When the provided lighting power in the growth at the illuminator may even be many hundredfold in comparison with the known illumination received from high above the growth, a corresponding or even higher lighting power may be achieved even when the light is chopped by moving the illuminators. In addition, a short-term strong light that comes from close by, and preferably from the side, is more effective for photosynthesis than a light that comes from far above and is already rather ineffective at the growth.

In an embodiment, the greenhouse has the plant row gaps 2, and the illuminator units 4 are arranged to move in the direction of the plant row gaps 2. The guides 5 are then preferably also arranged in the direction of the plant row gaps. The illuminator units 4 may be arranged for example to move back and forth in the plant row gap 2 or to go around in one direction along two parallel aisles. The illuminator units 4 may be moved at a rate of 5 to 50 s/m, for example.

One or more illuminators may be arranged on a bracket of a illuminator unit 4. From the illuminators of the bracket, light also penetrates through the plant row 1. Thus, the illuminator unit illuminates more plant rows than just the plant rows 1 adjacent to the plant row gap 2, where the illuminator unit 4 moves. According to Figure 1, the illuminator units 4 are preferably arranged to move in different rhythms, in other words, the illuminator units 4 move at different points in view of the adjacent illuminator unit. This way, even when there is no illuminator unit 4 in the plant's own plant row gap 2, the plant still receives light from a illuminator unit 4 in some other plant row gap 2. The darkest period for the plant then remains as short as possible and the photosynthesis of the plant does not necessarily stop at all, that is, the plant does not stop its photosynthesis between the bright light periods, and/or when the lighting power again increases, the plant achieves its maximum photosynthesis performance very quickly, in less than ten seconds. Correspondingly, if too long illumination breaks occur, the plant becomes dormant, after which it may take 1 to 30 minutes to start photosynthesis again, and this is avoided with the solution described in this patent application.

By arranging the illuminators 10 in the manner described above between the rows of plants and by moving them in the plant row gaps 2, the illuminators 10 may be positioned close to the plants. In professional cultivation, the illuminators are typically arranged to the ceiling structures or in their vicinity at a height of 5 m, for example. Illuminators of this type only provide a few percent of their maximum luminosity to the outer periphery of a 2 to 3-m high growth, for instance, and only a few parts per thousand inside the growth. Illuminators arranged in the plant row gap 2 as described in this embodiment may instead achieve even a many hundredfold lighting power for the growth at the position of the illuminators.

Figure 2 shows an embodiment in which at least two illuminator units 4 (three in the figure) are arranged in a guide or guide pair 5. In this embodiment, the illuminator unit 4 is suspended from the guide 5 by means of two bogies 6. In different embodiments, one or more guides 5 either arranged in pairs, in which case the illuminator unit 4 is hung from the guide pair, or more preferably individual guides, may be used. The guides 5 are arranged above the growth, for instance high in the greenhouse structures depending on the room height and maximum height of the growths to be illuminated. The guide 5 may be a slide bar or some other suitable guide type, for instance. The guides 5 may be of a standard guide type, such as slide bar C-50, the availability of fastening and extension parts of the guides 5 is also good. Illuminator units 4 may be added to the guides 5 or removed from them as individual modules according to the situation.

The illuminator unit 4 further comprises at least one bracket 7, to which one or more illuminators 10 may be arranged, in the embodiment of Figure 2, there are three illuminators 10. The structure of the bracket 7 may vary considerably from the example shown in Figure 2, whereby the bracket 7 may comprise for instance a single rod, a pair of rods, a frame, or some other suitable structure. At least some of the illuminators 10 preferably produce the light required by the plants for photosynthesis. For instance 1 to 5 illuminators 10 may be arranged to the bracket 7 depending on the type of the illuminator, its lighting power, the growth to be illuminated, and so forth. When using LED lights, for instance, the number of illuminators may even be considerably greater. Depending on the illuminators, illumination requirement, and illumination arrangement, the illuminators may be horizontal, vertical, or in another suitable position in the bracket. In different embodiments, the illuminators may be arranged in different manners to the bracket 7, for instance two or more in parallel in such a manner that the mounting positions of the illuminators differ from each other both horizontally and vertically, or by grouping the illuminators 10 in some other manner. This may be advantageous when using LED illuminators, for instance. The illuminators may also be arranged movably to the bracket 7 in such a manner that the height of the illuminators, for instance, may be adjusted individually, all illuminators at a time, or by using a combination of these methods. In one embodiment, all or some of the illuminators 10 in the bracket 7 may be arranged in a common fastening structure, a so-called carriage, whereby the illuminators 10 arranged in the carriage may be moved in one entity. This type of carriage solution is advantageous especially when illuminating high-growing growths, such as tomatoes and cucumbers. Especially the lowest illuminators should then advantageously be arranged in a carriage, whereby luminosity in the top part of the bracket 7 can easily be increased by increasing the number of illuminators there by elevating the carriage when the plants have grown and their lower parts no longer need light to a significant extent. In different embodiments, the elevation adjustment of the illuminators can be done manually or entirely or partly by automatic control.

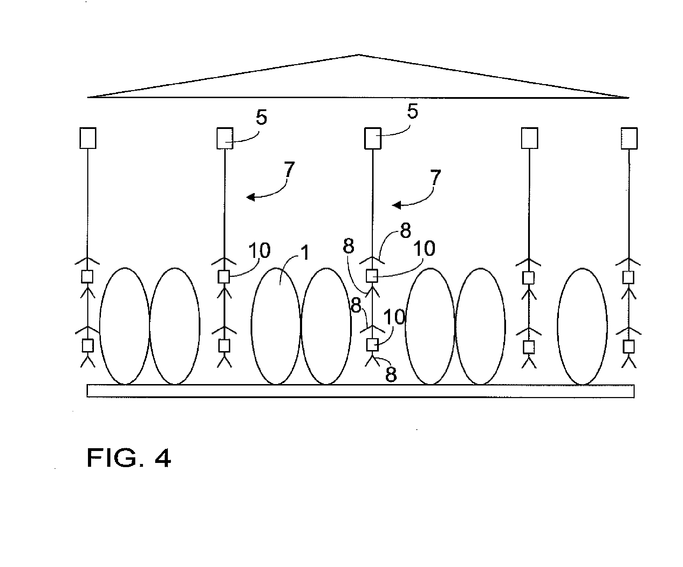

It is also possible to combine to the elevation adjustment of the illuminators, or to replace it with, the switching off and on of illuminators 10 at different heights for the purpose of providing advantageous lighting conditions for the plants being grown and their growth phase. When the plant is small, the illuminators positioned low may be on, and as the plant grows, the illuminators at different heights may be switched on and off as necessary. Further, the lighting may be adjusted with reflectors or mirror surfaces arranged at the illuminators 10, as described earlier in connection with the description of Figure 4.

By arranging several illuminator units 4 to the guides 5 (three illuminator units 4 in the embodiment of Figure 2) and by arranging to each illuminator unit 4 several illuminators 10 (three illuminators 10 in the embodiment of Figure 2), it is possible to further increase the lighting power. At the same time, it is possible to illuminate the plants preferably from many directions simultaneously, for example in the bottom part of the plant from the side and higher up obliquely from above. More illuminators 10 can also be added to the illuminator unit 4 as necessary. Similarly, more illuminator units 4 can be added to the guides as necessary.

In the embodiment of Figure 2, the illuminator units 4 are connected to each other by push bars 9. All the inter-connected illuminator units 4 may then be moved by moving one illuminator unit 4, whereby the movement is also transferred to the other connected illuminator units. The length of the push bars 9 may be selected according to a preferred relative distance of the illuminator units 4, and it may be 2 to 12 m, for instance, preferably 4 to 8 m. Correspondingly, the length of travel of the illuminator units 4, when the illuminator units 4 are moved back and forth, may be 4 to 12 m, for example. The length of travel may be adjusted by limit switches, for instance.

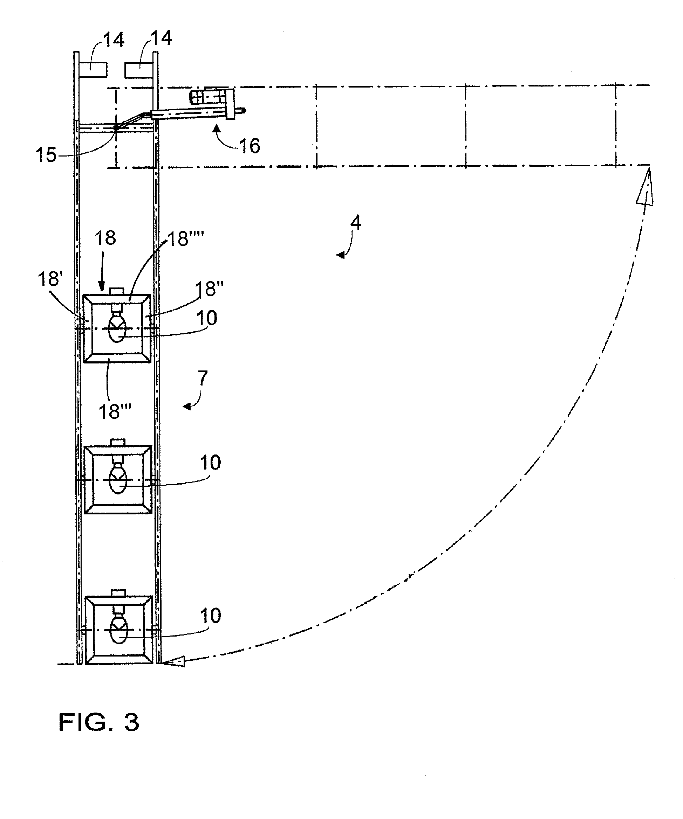

Not only the illuminators 10 require electricity, but also actuators 16 that are used to move the brackets 7 upward and presented in more detail in connection with Figure 3, and other possible control devices of the system. If the illuminator units 4 are moved as a group in the manner shown in the embodiment of Figure 2, electricity may be supplied to the first, in the figure the rightmost, illuminator unit 4 of the illuminator unit group by using a flat cable, for instance. A current supply cable 17 may then have its own bus bar, on which the cable runs on its own roller carriages. To the rest of the illuminator units 4 in the illuminator unit group, electricity may be supplied by using a rubber cable, for example, that may be fastened to the push bars 9 between the illuminator units 4. If the current is obtained for each illuminator unit 4 separately from the bus bar, the distance between the dollies may be dimensioned freely as necessary.

In the embodiment of Figure 2, the illuminator units 4 are moved by moving the illuminator unit 4 shown rightmost in the figure. In the embodiment of the figure, the illuminator units 4 are moved back and forth and the moving is done by a drive motor 11, such as a gear motor, a drive cable 12 and a cable coil 13. The cable may be a steel cable, for example. Driving forward and backward may be done by changing the drive direction of the motor, for instance. Inductive limit switches, for instance, may be used in adjusting the length of travel. Their sensor signals may then be directed through an automatic alarm and/or control system in such a manner that possible error situations are detected easily and it is possible to react to them quickly. The rate of movement may be fixed or adjustable by a frequency converter, for example. When using a frequency converter, reference control of the rate of travel may be done by a control room computer, for instance, that may also determine possibly needed stop and idle times. Control may also be done by programmable logic. Regardless of the embodiment, when using moving illuminator units 4, the system must naturally be equipped with an emergency stop system known per se to ensure safety.

Figure 3 shows an embodiment of a bracket 7 and its movement upward during plant maintenance work, for instance. In the embodiment of Figure 3, the bracket 7 with its illuminator 10 is turned up into a position parallel to the guide(s) 5, in a substantially horizontal position that is shown by dashed lines in the figure. In different embodiments, the bracket 7 may also be turned in different directions depending on the circumstances and possibilities, the final position may differ from the horizontal and be at an angle to the guides, for instance, or the bracket 7 may be turned directly upward in such a manner, however, that in these cases too, the bracket 7 is, when turned away, substantially in a high position and does not prevent maintenance and harvesting work, for example.

In Figure 3, the bracket 7 is equipped with a turning joint 15, in relation to which the bracket 7 is turned. The turning joint 15 may be, for instance, a separate joint belonging to the suspension of the bracket 7 or a suspension element acting as a joint. In the figure, the lifting mechanism is implemented with an actuator 16 that may be an electric cylinder or a pressure medium cylinder, such as a pneumatic cylinder. When using a pneumatic cylinder, the system is furnished with at least one compressor dimensioned as required to provide compressed air. The movement may be limited with limit switches, for instance, that may be separate or built into the actuator. In different embodiments, the turning of the bracket 7 may also be done in some other suitable manner, such as mechanically or manually.

Figure 3 further shows protecting structures 18 positioned at the illuminators 10. The protecting structure 18 is a framework-type structure that surrounds the illuminator 10 and in Figure 3 resembles a picture frame as seen from the front. The protecting structure 18 comprises on the sides of the illuminator 10 a first side part 18' and a second side part 18" and a bottom part 18"' below the illuminator 10 and a top part 18"" above the illuminator 10. The illuminator 10 may be fastened to said top part 18"". The bottom part 18"' and top part 18"" join the side parts 18' and 18" together. The first side part 18', second side part 18", bottom part 18"' and top part 18"" may be parts separate from each other and fastened to each other into a framework-type structure or they may form one uniform framework-type protecting structure 18.

Due to the first side part 18' and second side part 18", the light emitted by the illuminator 10 forms beam-like illumination toward the plants, while the first side part 18' and second side part 18" prevent illumination at a certain angle in the direction of the plant row gap. The extent of the illumination beam directed to the plants may, for instance, in one direction be at least 140 degrees, preferably 160 to 175 degrees, and depending on the implementation of the protecting structure 18 even 178 degrees, whereby only illumination exactly in the direction of the plant row gap is prevented. The wider the angle of illumination directed from the illuminator 10 to the plants, the further in the direction of the plant row gap each illuminator 10 illuminates the plants. It is then possible to extend the distance between the illuminator units 4 moving consecutively in the plant row gap but still maintain continuous illumination to the plants or, alternatively, the dark moment between two consecutive illuminator units may be shortened, thus intensifying the photosynthesis of the plants.

The first side part 18' and second side part 18" thus prevent light orientation at a given angle range in the direction of the plant row gap and this way reduce unnecessary illumination of the plant row gap and prevent a person possibly walking along the plant row gap from being dazzled. The first side part 18' and the second side part 18" may thus only prevent the travel of light at a given angle range in the direction of a plant row gap. Alternatively, the first side part 18' and the second side part 18" may be made into reflectors in such a manner that light directed to them by an illuminator 10 is reflected toward the plants, thus increasing the light received by the plants or enabling the use of a lower-powered lamp while the lighting power directed to the plants still remains the same. The bottom part 18"' and top part 18"" of the protecting structure may also be made into reflectors, whereby light reflected from the bottom part 18"' is directed to the plants obliquely from below and light reflected from the top part 18"" is directed to the plants obliquely from the top. Light directed to the plants obliquely from the top illuminates the plants effectively especially during the seedling phase when the plants are still relatively small. Light directed to the plants obliquely or generally from the top stimulates the height growth of the plants more effectively than light directed to the plants from the side.

The protecting structure 18 may have any colour, but preferably the protecting structure 18 is white, since white colour reflects light relatively efficiently. This is cost-wise a very advantageous alternative to obtain a light-reflecting surface, if one does not want to form the different parts of the protecting structure as special mirror-like reflecting surfaces.

Illuminators 10 used in greenhouses often require a separate inductor 14 that may be either the inductor of an individual illuminator 10 or a common inductor 14 arranged for the illuminators 10 of one bracket 7. Depending on the embodiment, the inductors 14 may be arranged to the body or carriage of the illuminator unit 4 or to the structure of the bracket 7. In this embodiment, the structure of the bracket has also been extended above the turning joint 15 as seen in the normal operational position. The inductors 14 may then preferably be arranged in the bracket 7 above the turning joint 15 and guides 5 as in Figure 7, that is, on the side of the turning joint 15 opposite to the illuminators 10. The typically rather heavy inductors 14 then lighten, stabilize and balance the turning of the bracket 7 into its top position. The figure shows by way of example two inductors 14. Instead of or in addition to the inductors 14, specific counterweights may also be used above the turning joint 15 to stabilize the turning of the bracket 7. This may be necessary for instance when using illuminators that require no inductors.

Figure 4 shows an embodiment, in which at least some of the illuminators 10 are equipped with wedge-like reflectors, mirror surfaces or other suitable light-reflecting surfaces that are later called reflectors for the sake of simplicity. It is then also possible to illuminate with one illuminator plants on both sides of the illuminator 10, for instance plant rows 1 on both sides of a plant row gap 2, by directing light to both plant rows 1 symmetrically or asymmetrically as necessary with a wedge-shaped reflector that belongs to the structure of the illuminator or is separate. Different illuminators 10 may then have a different but symmetrical orientation, for instance. By using a reflector, it is also possible to minimize light pollution from spreading into the environment.

In the embodiment of Figure 4, the illuminator 10 is equipped with two wedge-like reflectors arranged on opposite sides of the illuminator 10. In the embodiment of the figure, one reflector is arranged, in the normal position of the bracket 7, above the illuminator 10 and another reflector below. In the embodiment of the figure, each bracket 7 has two illuminators 10 arranged on top of each other.

In the embodiment of Figure 4, the reflectors 8 of the higher and lower illuminator 10 differ slightly from each other in their wedge angle. The upper reflector 8 of the higher illuminator 10 then directs light slightly obliquely downward and prevents light from being directed upward. The lower reflector 8 of the higher illuminator 10 in turn prevents light from being wasted on the aisle and directs it instead to the growth. The upper reflector 8 of the lower illuminator 10 directs light substantially horizontally and the lower reflector 8 prevents light from being directed to the aisle. The luminosity of the illuminator is then with good efficiency directed to the growth and also away from directions where light is not needed. Further, in some embodiments, when illuminating high growths in particular, the upper reflectors 8 of the lower illuminators 10 may also be directed in such a manner that light is also directed upward, if the growth then prevents the spreading of light pollution outside and/or away from the growth. The reflectors 8 may also be formed in such a manner that the angle of all reflectors 8, the reflectors 8 of a certain layer, or individual reflectors may be adjusted either manually or automatically. For instance, as the plants grow, it is then possible to direct light with the reflectors 8 by only adjusting the position of the reflectors 8 without moving the illuminators 10, or this may be combined with the height adjustment of the illuminators 10 that has been described earlier.

In addition to directing light effectively, these structurally open illuminators also provide the advantage of being easily serviced. Especially in embodiments where the illuminators 10 are moved, the open structure and the movement of the illuminator also efficiently cool the illuminator. The heating up of an illuminator is typically a specific problem with fixedly mounted illuminators with box-like structures. It is also possible to form illuminator modules from the illuminators 10 and reflectors 8, and these modules may easily added to the bracket 7 or removed from it as necessary. Further, by using reflectors, light may also be adjusted asymmetrically in different embodiments.

In a typical greenhouse, the length of a plant row gap 2 may be 10 to 120 m, for instance. The length of one illuminator unit 4 in the direction of a plant row may be 0.1 to 5 m, for instance, depending on the illuminator type and the placement of the illuminators, and when using individual illuminators arranged on top of each other, preferably 0.3 to 0.6 m depending on the illuminator. The distance of the illuminator units 4 from each other may be dimensioned on the basis of the lighting power of the illuminators. The relative distance between the illuminator units moving back and forth between the plants may for instance be 2 to 12 m, preferably 4 to 8 m. The rate of travel of the illuminator unit 4 may be 5 to 50 s/m, for instance. The lighting conditions are dimensioned according to the need of each plant so that energy consumption and the photosynthesis performance of the plant is optimized.

According to an example, the plant row gap 2 is a maintenance aisle having a length of 50 m, and the length of the illuminator unit 4 is approximately 0.5 m. The rate of the illuminator unit may then be arranged at 5 to 50 s/m, for example. In such a case, one plant receives strong illumination for a few dozens of seconds every few minutes, for instance. Depending on the growth, used illuminators, and other factors, the length of the illuminator unit 4 may differ from what is stated above. For dimensioning, it is essential that the rhythm of the illumination is provided in such a manner that the number and energy consumption of illuminators and the photosynthesis capability of the plants are optimized.

In various embodiments, it is also possible to arrange to the illuminator units 4 a shaking beater 14 that is arranged to snap or shake the plants for example by touching the line or vertical support bracket supporting and/or suspending the plants. This way it is possible to ensure the pollination of the plants by means of the shaking beaters 14. If required, it is also possible to arrange at the illuminator units 4 ultra-violet lamps, with which plant diseases may be prevented.

The carriage 15 may be arranged to move by means of an electric motor 11 that receives its electricity from the bus bar 5. The motor 11 is preferably located under the carriage 15 or at its end, whereby it does not hamper harvesting. Instead of using a motor 11 placed in the carriage 15, the carriage 15 may also be moved by arranging at the ends of the maintenance aisles 2 coils, from which ropes are connected to the carriage 15, and by alternately turning the coils at the ends of the maintenance aisle 2 by using an electric motor, for instance, the carriage 15 is pulled with the rope rewound on the coil toward the end of the maintenance aisle 2.

The movement and rate of movement of the illuminator units and the illuminators 10 may be controlled by a computerized control system of the greenhouse. The control commands may be directed wirelessly to a link box arranged in the illuminator unit or a wired connection may be arranged to the illuminator unit. The wired connection may be implemented for instance by arranging a guide on a guide coil that unwinds as the illuminator unit 4 moves away from the fixed fastening point of the guide and rewinds back on the guide coil as the illuminator unit 4 moves toward the fixed fastening point. The guide coil may be arranged to either the illuminator unit 4 or to the greenhouse structures.

Any kind of lamp suitable for illuminating plants may be used in the illuminator 10. High-pressure sodium lamps are typically used. High-pressure sodium lamps also produce quite a lot of thermal radiation, but since the illuminators move all the time, the thermal radiation produced by the lamps does not burn the leaves or damage the fruit. The luminosity of the lamps may also be higher than what the plants need at a maximum, because presumably too bright a light for a short time does not harm the plants. Multimetal lamps or sulphur plasma lamps may also be used as the illuminators. Some or all of the illuminators may further be LED illuminators. LED illuminators provide the advantage of having a relatively low energy consumption. In addition, LED illuminators are durable. LED illuminators also do not produce extra thermal radiation to a great extent, so they do not substantially heat the leaves of the plants, at least not excessively, and it is also possible to install a separate cooling system for LED lights, if desired. Therefore, LED illuminators may be used to illuminate plants quite close, and illuminator groups 4 may be placed closer to each other than when using conventional illuminators. LED illuminators also produce desired wave length ranges of light, with which plant production can be increased further. It is also possible to combine ultra-violet lamps to the system to prevent plant diseases.

In some cases, the features disclosed in this patent application may be used as such, regardless of other features. On the other hand the features disclosed in this patent application may, when necessary, be combined to form various combinations.

The drawings and the related description are only intended to illustrate the idea of the invention. The invention may vary in detail within the scope of the claims. Therefore, in addition to illuminating plants with illuminator units 4, it is also possible to arrange a few illuminators at the top structures of the greenhouse, for instance, to provide general illumination, if desired. Plants may also be illuminated by means of hanging LED illuminators, for instance. If the plants are arranged in what are known as double rows, LED illuminators may then be hung between the double rows, if the distance is sufficiently long. The hanging lights, too, may be made movable along a bus bar, for instance.

## Claims

1. A method for illuminating greenhouse plants, **character**i s e d by arranging above the plants at least one guide (5), hanging from the guide (5) at least one illuminator unit (4) that is moved in the direction of the guide (5) to illuminate the plants close to the plants and that comprises at least one bracket (7), and arranging into each bracket (7) at least one illuminator (10) in such a manner that each bracket (7) with its illuminator (10) is movable upward by lifting up the bracket (7) by turning the bracket (7) relative to a turning joint (15), which turning joint (15) is a separate joint that belongs to the suspension of the bracket (7) or a suspension element acting as a joint, for instance when the plants are maintained.

2. A method as claimed in claim 1, **characterised** in that in the greenhouse, there are plant row gaps (2) and the illuminator units (4) are arranged to move in different rhythms in the direction of the plant row gaps (2).

3. A method as claimed in claim 2, **characterised** in that the illuminator units (4) are moved essentially back and forth along a plant row gap (2) or around two parallel plant row gaps (2).

4. A method as claimed in any one of the preceding claims, **characterised** by illuminating the plants with illuminators (10) at least partly in lateral direction.

5. A method as claimed in any one of the preceding claims, **characterised** in that at least some of the brackets (7) are arranged between growths.

6. A method as claimed in claim 1, **characterised** in that two wedge-like mirror or reflecting surfaces (8) are arranged at the illuminator (10) in such a manner that the mirror or reflecting surfaces (8) are arranged on opposite sides of the illuminator (10) so as to be able to direct substantially the entire luminosity to the growth.

7. A method as claimed in any one of the preceding claims, **characterised** by directing to the plants a light beam that is limited by a protecting structure (18) arranged to the illuminator (10) and framing it (10), and the extent of the light beam in one direction is at least 140 degrees.

8. An arrangement for illuminating greenhouse plants, **charac** - **t e r i s e d** in that above the plants at least one guide (5) is arranged, from which at least one illuminator unit (4) is hung which is movable in the direction of the guide to illuminate the plants close to the plants and that comprises at least one bracket (7), and into each bracket (7) at least one illuminator (10) is arranged in such a manner that each bracket (7) with its illuminator (10) is movable upward by lifting up the bracket (7) by turning the bracket (7) relative to a turning joint (15), which turning joint (15) is a separate joint that belongs to the suspension of the bracket (7) or a suspension element acting as a joint for instance when plants are maintained.

9. An arrangement as claimed in claim 8, **characterised** in that in each guide or guide pair (5) at least two illuminator units (4) are arranged.

10. An arrangement as claimed in claim 8 or 9, **characterised** in that at least two illuminators (10) are arranged in each bracket (7) and that the illuminators (10) of a bracket (7) are arranged vertically at different heights.

11. An arrangement as claimed in any one of claims 8 to 10, **characterised** in that the light of at least some of the illuminators (10) are directable by means of mirror or reflecting surfaces (8) in such a manner that one illuminator (10) illuminates symmetrically or asymmetrically the growth on opposite sides of the illuminator (10).

12. An arrangement as claimed in any one of claims 8 to 11, **characterised** in that illuminator units (4) are connected to each other with push bars (9), whereby moving one illuminator unit (4) also moves the other illuminator units (4) connected to it.

13. An arrangement as claimed in any one of claims 8 to 12, **characterised** in that the current necessary for moving the illuminator units (4) is obtainable from a bus bar, in which case the distance between the illuminator units (4) may be dimensioned freely as necessary.

14. An arrangement as claimed in any one of claims 8 to 13, **characterised** in that to the illuminator (10) a protecting structure (18) framing the illuminator (10) is arranged to restrict the beam of light directed from the illuminator (10) directly to the plants to a shape whose extent in one direction is at least 140 degrees.

## Patentansprüche

1. Verfahren zum Beleuchten von Treibhauspflanzen, gekennzeichnet durch das Anordnen wenigstens einer Führung (5) oberhalb der Pflanzen, durch das Aufhängen wenigstens eine Beleuchtungseinheit (4) von der Führung (5), die in der Richtung der Führung (5) bewegt wird, um die Pflanzen nahe der Pflanzen zu beleuchten, welche ferner wenigstens einen Halter (7) umfasst, sowie durch das Anordnen wenigstens einer Leuchte (10) in jedem Halter (7) derart, dass jeder Halter (7) mit seiner Leuchte (10) nach oben bewegt werden kann, indem der Halter (7) dadurch angehoben wird, dass der Halter (7) bezogen auf ein Drehgelenk (15) gedreht wird, wobei das Drehgelenk (15) ein separates Gelenk ist, das zur Aufhängung des Halters (7) gehört, oder ein Aufhängungselement, das als Gelenk dient, zum Beispiel bei der Pflege der Pflanzen.

2. Verfahren nach Anspruch 1, **dadurch gekennzeichnet, dass** im Treibhaus Pflanzenreihenzwischenräume (2) vorliegen und die Beleuchtungseinheiten (4) angeordnet sind, sich in verschiedenen Taktungen in Richtung der Pflanzenreihenzwischenräume (2) zu bewegen.

3. Verfahren nach Anspruch 2, **dadurch gekennzeichnet, dass** die Beleuchtungseinheiten (4) im Wesentlichen entlang eines Pflanzenreihenzwischenraums (2) oder um zwei parallele Pflanzenreihenzwischenräume (2) herum vor und zurück bewegt werden können.

4. Verfahren nach einem der vorhergehenden Ansprüche, **dadurch gekennzeichnet, dass** die Pflanzen unter Einsatz von Leuchten (10) wenigstens teilweise aus einer seitlichen Richtung beleuchtet werden.

5. Verfahren nach einem der vorhergehenden Ansprüche, **dadurch gekennzeichnet, dass** wenigstens einige der Halter (7) zwischen Gewächsen angeordnet sind.

6. Verfahren nach Anspruch 1, **dadurch gekennzeichnet, dass** zwei keilförmige Spiegeloberflächen oder spiegelnde Oberflächen (8) derart an der Leuchte (10) angeordnet sind, dass die Spiegeloberflächen oder spiegelnden Oberflächen (8) derart auf gegenüberliegenden Seiten der Leuchte (10) angeordnet sind, dass sie im Wesentlichen die gesamte Leuchtkraft auf das Gewächs richten können.

7. Verfahren nach einem der vorhergehenden Ansprüche, gekennzeichnet durch ein Richten eines Lichtstrahls auf die Pflanzen, der durch eine an der Leuchte (10) angeordnete und diese (10) einrahmende Schutzanordnung (18) begrenzt wird, und dadurch, dass die Breite des Lichtstrahls in einer Richtung wenigstens 140° beträgt.

8. Anordnung zum Beleuchten von Treibhauspflanzen, gekennzeichnet durch das Anordnen wenigstens einer Führung (5) oberhalb der Pflanzen, von der wenigstens eine Beleuchtungseinheit (4) herabhängt, die in der Richtung der Führung bewegt werden kann, um die Pflanzen nahe der Pflanzen zu beleuchten, welche ferner wenigstens einen Halter (7) umfasst, wobei in jedem Halter (7) wenigstens eine Leuchte (10) derart angeordnet ist, dass jeder Halter (7) mit seiner Leuchte (10) nach oben bewegt werden kann, indem der Halter (7) dadurch angehoben wird, dass der Halter (7) bezogen auf ein Drehgelenk (15) gedreht wird, wobei das Drehgelenk (15) ein separates Gelenk ist, das zur Aufhängung des Halters (7) gehört, oder ein Aufhängungselement, das als Gelenk dient, zum Beispiel bei der Pflege der Pflanzen.

9. Anordnung nach Anspruch 8, **dadurch gekennzeichnet, dass** in jeder Führung oder in jedem Führungspaar (5) wenigstens zwei Beleuchtungseinheiten (4) angeordnet sind.

10. Anordnung nach einem der Ansprüche 8 oder 9, **dadurch gekennzeichnet, dass** wenigstens zwei Leuchten (10) in jedem Halter (7) angeordnet sind und dass die Leuchten (10) eines Halters (7) vertikal in verschiedenen Höhen angeordnet sind.

11. Anordnung nach einem der Ansprüche 8 bis 10, **dadurch gekennzeichnet, dass** das Licht von wenigstens manchen der Leuchten (10) über Spiegeloberflächen oder spiegelnde Oberflächen (8) derart ausrichtbar ist, dass eine Leuchte (10) das Gewächs symmetrisch oder asymmetrisch auf einander gegenüberliegenden Seiten der Leuchte (10) beleuchtet.

12. Anordnung nach einem der Ansprüche 8 bis 11, **dadurch gekennzeichnet, dass** Beleuchtungseinheiten (4) über Druckstangen (9) miteinander verbunden sind, wobei beim Bewegen einer Beleuchtungseinheit (4) auch die damit verbundenen anderen Beleuchtungseinheiten (4) bewegt werden.

13. Anordnung nach einem der Ansprüche 8 bis 12, **dadurch gekennzeichnet, dass** der erforderliche Strom zum Bewegen der Beleuchtungseinheiten (4) von einer Sammelschiene bezogen werden kann, wobei der Abstand zwischen den Beleuchtungseinheiten (4) ggf. frei angepasst werden kann.

14. Anordnung nach einem der Ansprüche 8 bis 13, **dadurch gekennzeichnet, dass** an der Leuchte (10) eine Schutzanordnung (18) angeordnet ist, die die Leuchte (10) einrahmt, um den von der Leuchte (10) direkt auf die Pflanzen abgestrahlten Lichtstrahl auf eine Form zu beschränken, deren Breite in einer Richtung wenigstens 140° beträgt.

## Revendications

1. Procédé d'éclairage de plantes de serre, **caractérisé en ce que** l'on aménage au-dessus des plantes au moins un guide (5), on suspend au guide (5) au moins une unité d'éclairage (4) qui est déplacée dans la direction du guide (5) pour éclairer les plantes à proximité des plantes et qui comprend au moins une potence (7) et on aménage dans chaque potence (7) au moins une source lumineuse (10) de manière que chaque potence (7) avec sa source lumineuse (10) puisse être déplacée vers le haut en soulevant la potence (7) par rotation de la potence (7) par rapport à une charnière (15), laquelle charnière (15) est un joint séparé qui appartient à la suspension de la potence (7) ou un élément de suspension agissant comme un joint, par exemple lorsque les plantes sont entretenues.

2. Procédé selon la revendication 1, **caractérisé en ce que**, dans la serre, il y a des intervalles (2) entre les rangées de plantes et les unités d'éclairage (4) sont aménagées pour se déplacer à différents rythmes dans la direction des intervalles (2) entre les rangées de plantes.

3. Procédé selon la revendication 2, **caractérisé en ce que** les unités d'éclairage (4) sont déplacées essentiellement en va-et-vient le long d'un intervalle (2) entre les rangées de plantes ou autour de deux intervalles parallèles (2) entre les rangées de plantes.

4. Procédé selon l'une quelconque des revendications précédentes, **caractérisé en ce que** l'on éclaire les plantes avec des sources lumineuses (10) au moins en partie dans la direction latérale.

5. Procédé selon l'une quelconque des revendications précédentes, **caractérisé en ce qu'**au moins certaines des potences (7) sont aménagées entre des pousses.

6. Procédé selon la revendication 1, **caractérisé en ce que** deux surfaces spéculaires ou réfléchissantes cunéiformes (8) sont aménagées sur les côtés opposés de la source lumineuse (10) de manière à être à même de diriger sensiblement toute la luminosité sur les pousses.

7. Procédé selon l'une quelconque des revendications précédentes, **caractérisé en ce que** l'on dirige sur les plantes un faisceau lumineux qui est limité par une structure protectrice (18) aménagée sur la source lumineuse (10) et qui l'encadre (10) et l'extension du faisceau lumineux dans une direction est d'au moins 140 degrés.

8. Aménagement d'éclairage de plantes de serre, **caractérisé en ce qu'**au-dessus des plantes est aménagé au moins un guide (5) auquel est suspendue au moins une unité d'éclairage (4) qui peut être déplacée dans la direction du guide pour éclairer les plantes à proximité des plantes et qui comprend au moins une potence (7) et dans chaque potence est aménagée une source lumineuse (10) de manière que chaque potence (7) avec sa source lumineuse (10) puisse être déplacée vers le haut en soulevant la potence (7) par rotation de la potence (7) par rapport à une charnière (15), laquelle charnière (15) est un joint séparé qui appartient à la suspension de la potence (7) ou un élément de suspension agissant comme un joint, par exemple lorsque les plantes sont entretenues.

9. Aménagement selon la revendication 8, **caractérisé en ce qu'**au moins deux unités d'éclairage (4) sont aménagées dans chaque guide ou paire de guides (5).

10. Aménagement selon la revendication 8 ou la revendication 9, **caractérisé en ce qu'**au moins deux sources lumineuses (10) sont aménagées dans chaque potence (7) et les sources lumineuses (10) d'une potence (7) sont aménagées verticalement à différentes hauteurs.

11. Aménagement selon l'une quelconque des revendications 8 à 10, **caractérisé en ce que** la lumière d'au moins certaines des sources lumineuses (10) peut être dirigée au moyen de surfaces spéculaires ou réfléchissantes (8) de manière qu'une source lumineuse (10) éclaire symétriquement ou asymétriquement les pousses sur les côtés opposés de la source lumineuse (10).

12. Aménagement selon l'une quelconque des revendications 8 à 11, **caractérisé en ce que** les unités d'éclairage (4) sont raccordées l'une à l'autre par des barres de poussée (9), de sorte que le déplacement d'une unité d'éclairage (4) déplace également les autres unités d'éclairage (4) qui lui sont raccordées.

13. Aménagement selon l'une quelconque des revendications 8 à 12, **caractérisé en ce que** le courant nécessaire pour déplacer les unités d'éclairage (4) peut être obtenu à partir d'une barre collectrice, auquel cas la distance entre les unités d'éclairage (4) peut être dimensionnée librement selon les besoins.

14. Aménagement selon l'une quelconque des revendications 8 à 13, **caractérisé en ce que**, au niveau de la source lumineuse (10), une structure protectrice (18) encadrant la source lumineuse (10) est aménagée pour limiter le faisceau de lumière dirigé de la source lumineuse (10) directement sur les plantes à une forme dont l'extension dans une direction est d'au moins 140 degrés.
